# EUROPÄISCHE PATENTSCHRIFT

(11) **EP 2 771 142 B1**
(45) Veröffentlichungstag und Bekanntmachung des Hinweises auf die Patenterteilung: **04.05.2016**
(21) Anmeldenummer: 12778112.8
(22) Anmeldetag: 25.10.2012
(51) Int. Cl.: B23B 27/16

(54) **WERKZEUGSYSTEM**
TOOL SYSTEM
SYSTÈME D'OUTIL

(30) Priorität: 26.10.2011 DE 102011085250
(43) Veröffentlichungstag der Anmeldung: 03.09.2014
(73) Patentinhaber: CeramTec GmbH, 73207 Plochingen (DE)
(72) Erfinder: HENZLER, Uwe, 73269 Hochdorf (DE); STEMMER, Uwe, 72622 Nürtingen (DE)
(74) Vertreter: Scherzberg, Andreas Hans
(86) Internationale Anmeldenummer: PCT/EP2012/071097
(87) Internationale Veröffentlichungsnummer: WO 2013/060752

(56) Entgegenhaltungen:
- EP-A2- 0 402 934
- FR-A5- 2 134 944
- JP-A- 2007 203 437
- US-A- 3 268 977
- US-A- 4 286 901
- US-A- 4 848 198
- US-A1- 2003 086 766
- US-A1- 2010 316 454

## Beschreibung

Die Erfindung betrifft ein spanabhebendes Werkzeugsystem gemäß dem Oberbegriff des Anspruchs 1 mit einem Trägerwerkzeug, einer Schneidplatte mit einer Spannmulde und einem Spannelement mit zugehöriger Spannschraube, wobei an der zur Schneidplatte gewandten Unterseite des Spannelements ein Eingreifelement angeordnet ist, das im eingebauten Zustand mit der Spannmulde in spannender Berührung steht und die Schneidplatte dadurch verankert und das Spannelement über eine Schräge so geführt ist, dass beim Anziehen der Spannschraube das Spannelement in Spannrichtung gezogen wird. Ein solches Werkzeugsystem ist aus der EP-A2-0 402 934 bekannt.

Aus der WO 2007080151 A1 ist ein spanabhebendes Werkzeugsystem bekannt, welches im Wesentlichen aus einem Trägerwerkzeug besteht, welches eine Ausnehmung zur Aufnahme einer Schneidplatte aufweist. Die Schneidplatte ist mit einer Spannmulde versehen. Die Schneidplatte wird von einem Spannelement im Trägerwerkzeug gehalten. Das Spannelement ist wiederum über eine Spannschraube auf dem Trägerwerkzeug befestigt. An der zur Schneidplatte gewandten Unterseite des Spannelements ist ein Eingreifelement angeordnet, das mit der Spannmulde in spannender Berührung steht und die Schneidplatte dadurch auf dem Trägerwerkzeug verankert. Das Spannelement ist über eine Schräge auf dem Trägerwerkzeug geführt, so dass beim Anziehen der Spannschraube das Spannelement hin zum Trägerwerkzeug gezogen wird.

Der Erfindung liegt die Aufgabe zugrunde, ein Werkzeugsystem nach dem Oberbegriff des Anspruchs 1 so zu verbessern, dass es auch für die Anwendung in der Dreh-Schruppbearbeitung mit Schnittdaten von bis zu vc 3000 m/min, ap bis 10 mm (abhängig von Plattengröße und Schneidplattengeometrie und dem zu bearbeitenden Werkstoff) und einem Vorschub f bis 1,0 mm und ggf. höher geeignet ist. Es soll außerdem eine hohe Prozesssicherheit gewährleitet werden. Erfindungsgemäß wird diese Aufgabe durch die Merkmale des Anspruchs 1 gelöst.

### Dadurch,

a. dass das Spannelement in einer Nut mit parallelen Spannelementführungen angeordnet ist, in der das Spannelement in Spannrichtung verschiebbar geführt ist, wobei das Spannelement zwei parallele Führungsflächen aufweist, die an den Spannelementführungen flächig anliegenden, so dass das Spannelement beidseitig in der Nut geführt ist,
b. dass im Spannelement eine Spannelementbohrung für die Spannschraube angeordnet ist und im eingespannten Zustand der Schneidplatte die zur Schneidplatte gewandte Wandung der Spannelementbohrung an der Spannschraube anliegt und
c. dass das Eingreifelement, von der Schneidkante der Schneidplatte aus gesehen, vor der Mitte der Spannmulde in diese formschlüssig eingreift,
ist das Werkzeugsystem auch für die Anwendung in der Dreh-Schruppbearbeitung für materialbelastende Arbeiten geeignet.

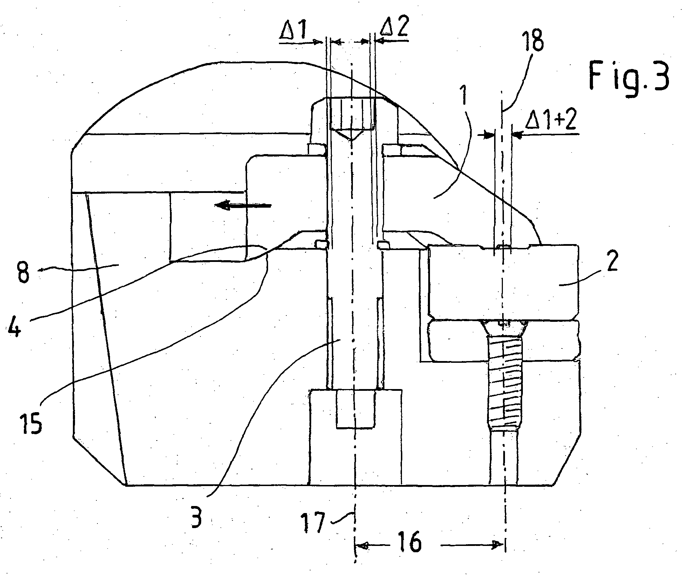

Durch die beidseitige Führung des Spannelements ist ein sicheres Eingreifen der Spannelementkontur bzw. des Eingreifelements in die Spannmulde der Schneidplatte gewährleistet. Die Lage des Spannelementes ist somit auch unabhängig von der Werkzeugläge im Raum (Maschine) immer dieselbe (kein Verdrehen), womit ein Wechsel der Schneidplatte z. B. auch Überköpf (bezogen auf das Werkzeug) problemlos durchführbar ist. Das Anliegen der Wandung der Spannelementbohrung an der Spannschraube ist ein wichtiges Merkmal der Erfindung, da dadurch Δ2 gleich Null ist (siehe Figur 3) und der Abstand von der Längsachse der Spannschraube zum Zentrum der Schneidplatte immer gleich groß ist. Das Eingreifelement an der Unterseite des Spannelements greift dadurch an genau definierter Stelle in die Spannmulde ein. Dies ist extrem wichtig, da sonst undefinierte Kräfte auf die Schneidplatte einwirken. Die hohe Prozesssicherheit wird ferner durch das Drücken des Eingreifelements (Spannelementnase) vor der Mitte der Spannmulde erzielt. Hierdurch wird ein Aufschnäbeln der Schneidplatte ausgeschlossen Mit "vor der Mitte der Spannmulde" ist gemeint, dass das Eingreifelement von der Schneidkante aus gesehen, vor der Mitte der Spannmulde in diese formschlüssig eingreift.

Erfindungsgemäß ist das Werkzeugsystem bevorzugt als Monoblockwerkzeug oder als Werkzeug mit Adapter auszubilden.

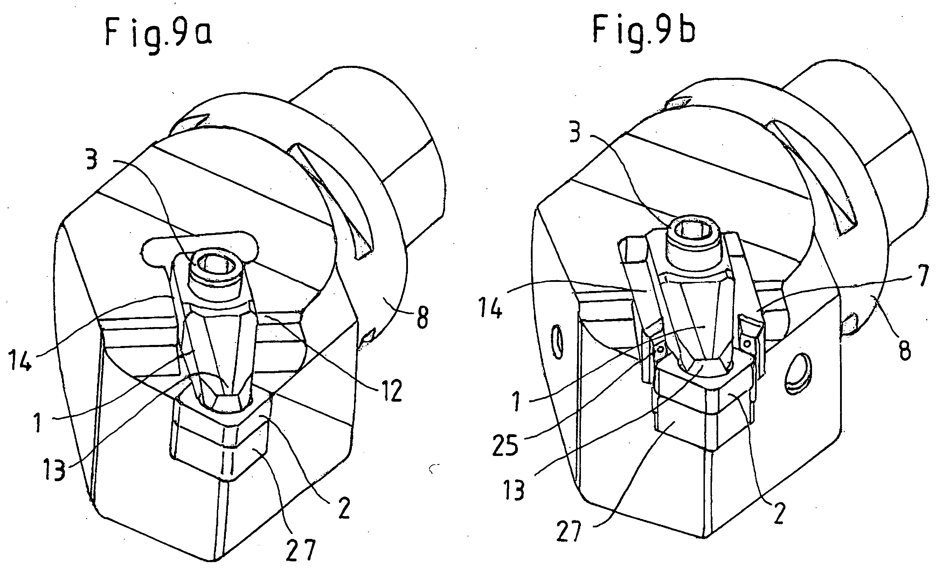

Wenn das Werkzeugsystem als Monoblockwerkzeug ausgebildet ist, ist bevorzugt die Schneidplatte in einer Ausnehmung des Trägerwerkzeugs angeordnet, das Spannelement ist über die Spannschraube auf dem Trägerwerkzeug befestigt, ist die Schräge auf dem Trägerwerkzeug angeordnet und wird beim Anziehen der Spannschraube das Spannelement in Spannrichtung hin zum Trägerwerkzeugs gezogen wird. Diese Ausführungsform ist in Figur 9a gezeigt.

Wenn das Werkzeugsystem mit Adapter ausgebildet ist, ist bevorzugt der Adapter in einer Adapternut auf dem Trägerwerkzeug befestigt, ist im Adapter die Nut mit den parallelen Spannelementführungen angeordnet, ist in der Nut das Spannelement beidseitig geführt und sind im Adapter eine durchgehende Bohrung für die Spannschraube und durchgehende Bohrungen zur Befestigung des Adapters auf dem Trägerwerkzeugs angeordnet, liegt die Schneidplatte in einer an die Geometrie der Schneidplatte angepasste Aufnahme im Adapter an und ist die Schräge am Adapter und nicht am Trägerwerkzeugs angeordnet. Die seitlichen Führungen und die Schräge bzw. Rückzugsschräge (siehe später) sind bewusst am Adapter integriert (und nicht am Trägerwerkzeug damit die Flucht/Axialität/Parallelität von Spannelement und Schneidplattenmitte exakt übereinstimmen. Der Adapter wird bevorzugt aus Warmarbeitsstahl gefertigt.

Alle nachfolgenden Ausgestaltungen lassen sich sowohl für das Monoblockwerkzeug als auch für das Werkzeug mit Adapter verwenden.

Bevorzugt beträgt die Toleranz der Führungsbreite (B) der Nut, d.h. die Toleranz des Abstands der Spannelementführungen voneinander B ± 0,025 und beträgt die Toleranz der Breite des Spannelements, d.h. die Toleranz des Abstands der Führungsflächen am Spannelement voneinander B ± 0,05. Durch die eng tolerierte Führung wird auch bei schweren Bearbeitungen und evtl. kurzfristig auftretenden Überlastungen das Spannelement seine Lage beibehalten. Im Falle eines "Crashes" kann damit unter Umständen größerer Schaden vom Trägerwerkzeug und Werkstück abgewendet werden.

Bevorzugt ist am hinteren Ende des Spannelements, von der Schneidplatte aus gesehen, eine die Schräge bildende Rückzugsschräge angeordnet. und befindet sich beim Monoblockwerkzeug auf dem Trägerwerkzeug eine an die Rückzugsschräge angepasste Abrutschschräge und befindet sich beim Werkzeugsystem mit Adapter eine Rückzugsschräge am hinteren Ende des Adapters und liegt der Winkel der Rückzugsschrägen und der Abrutschschrägen zur Horizontalen bevorzugt zwischen 15 bis 25 Grad, besonders bevorzugt bei 20 Grad. Eine Positionierung in axialer Zugrichtung des Spannelementes vom Zentrum des Spannelementkopfes zum Zentrum der Schneidplatte ist dadurch zusammen mit der Anlage der Spannelementschraube an der Spannelemeritbohrung aufgrund der Abmaße über die Bohrung im Spannelement automatisch gegeben.

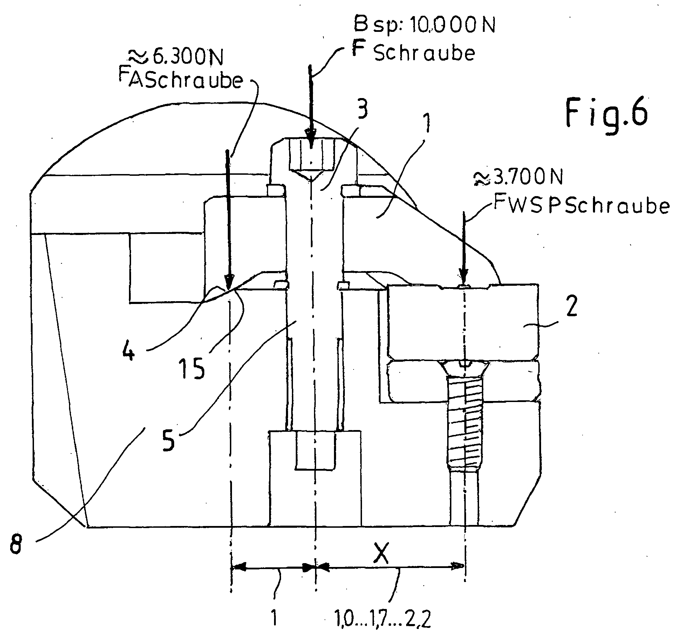

Bevorzugt teilt sich die Spannkraft F_{Schraube} der Spannschraube auf das Spannelement auf die Schrägen F_{ASchraube} und auf die Schneidplatte F_{WSPSchraube} auf, wobei F_{Schraube} = F_{ASchraube} + F_{WSPSchraube} und F_{ASchraube} = F_{WSPSchraube} * X, wobei X zwischen 1,6 und 1,8 bevorzugt bei 1,7 liegt. Wichtig für ein prozesssicheres Spannen der Schneidplatte ist das gewählte Längen- (Hebel-) verhältnis am Spannelement. Das erfindungsgemäße Werkzeugsystem ist bevorzugt mit einem Verhältnis von 1 : 1,7 ausgelegt (siehe Figur 6). Damit wird erreicht, dass 37% der eingeleiteten Schraubenkraft als Schließkraft auf die Schneidplatte wirken.

Bevorzugt ist die Spannschraube am Schraubenende mit einem Außensechskant ausgebildet. Die Spannelementbohrung durchragt das Trägerwerkzeug so, dass das Schraubenende der Spannschraube erreichbar ist. Hierdurch ist beim Schneidplattenwechsel ein Lösen der Spannschraube von unten ermöglicht. Dies ist notwendig, wenn das Werkzeug z. B. über Kopf in der Maschine steht.

Bevorzugt ist in den Spannelementführungen der Nut eine Kühlmediumzuführung integriert. Bevorzugt sind die Spannelementführungen als zur Schneidplatte hin abfallende Rampen ausgebildet und führen über zwei Übergangsradien R3, R5 bis zur Schneidplattenoberseite. Die Austrittsöffnung der Kühlmediumzuführung ist zwischen den Radien R3 und R5 angeordnet. Kühlmittel verlängert die Lebensdauer des Werkzeugsystems und *die Standzeit der Schneidplatte. Außerdem verbessert es die Werkstückoberfläche.*

Bevorzugt beträgt der Rampenwinkel α der Rampe zu der Schneidplattenoberseite zwischen 3 und 10 Grad. Hierdurch werden die anfallenden Späne besser abgeleitet.

Bevorzugt sind für spezielle Anwendungen an der Austrittsöffnung ein Gewinde für eine Verschlussschraube oder eine Düse angeordnet.

Bevorzugt ist die Verwendung dieses Werkzeugsystems für die Dreh-Schruppbearbeitung mit Schnittdaten von bis zu vc = 3.000 m/min, ap bis 10 mm (abhängig von Plattengröße und Schneidplattengeometrie und dem zu bearbeitenden Werkstoff) und einem Vorschub f bis 1,0 mm.

In der gesamten Beschreibung wird von einer Schneidplatte gesprochen, obwohl es sich bevorzugt um eine Wendeschneidplatte handelt.

Nachfolgend wird die Erfindung anhand von Figuren weiter erläutert.

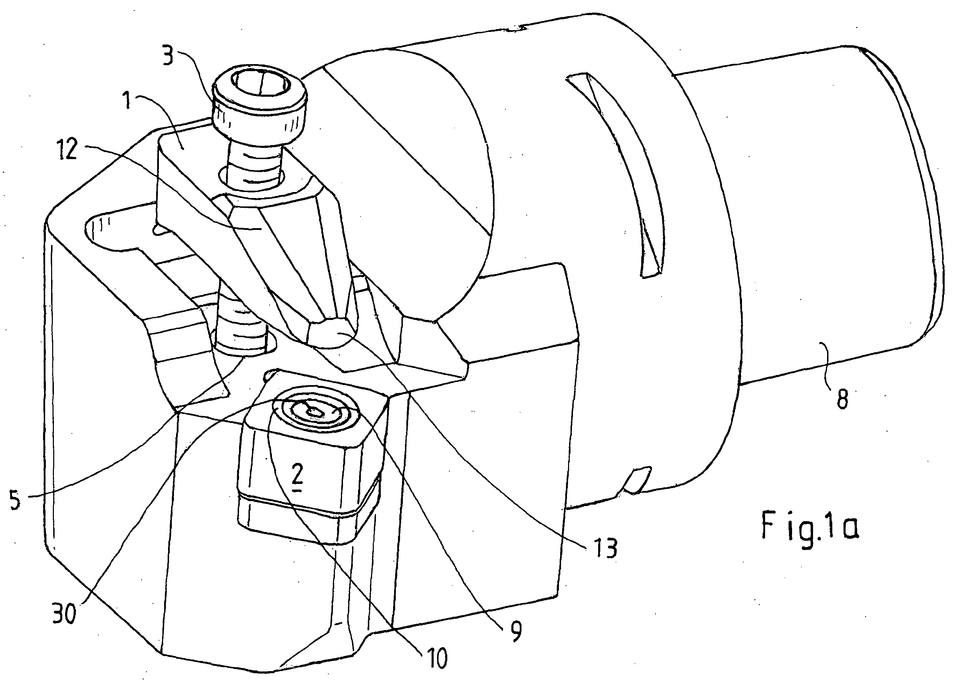

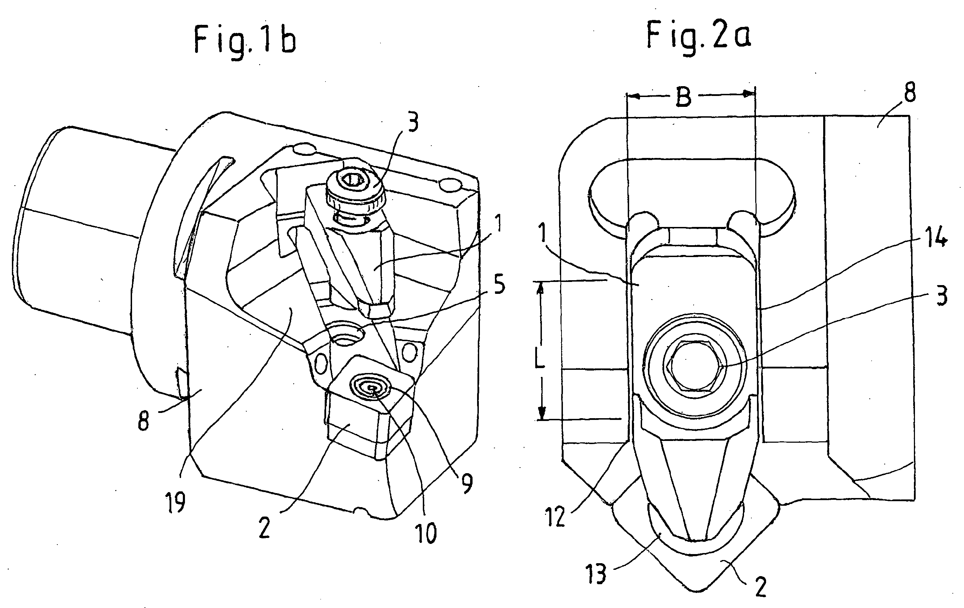

In den Figuren 1 a und 1 b sind zwei erfindungsgemäße Werkzeugsysteme gezeigt.

Mit dem Bezugszeichen 8 ist jeweils das Trägerwerkzeug gekennzeichnet, welches eine Ausnehmung zur Aufnahme einer Schneidplatte 2 aufweist. Die Schneidplatten 2 gemäß der Figuren 1a und 1b weisen eine kreisförmige Spannmulde 9 auf in der eine kugel- bzw. kreisförmige Erhebung 30 angeordnet ist. Der höchste Punkt der Erhebung 30 ist oberhalb des Bodens der Spannmulde 9 und unterhalb der Schneidplattenoberseite, bzw. unterhalb der Spanfläche angeordnet.

Bevorzugt ist, wie in Figur 1a zu sehen, koaxial zur ersten Spannmulde 9 eine zweite Spannmulde 10 angeordnet, wobei die erste Spannmulde 9 tiefer als die zweite Sparinmulde 10 und beide 9, 10 tiefer als die Schneidplattenoberseite angeordnet sind. Hierdurch ist der Höhenabstand der ersten Spannmulde 9 zur zweiten Spannmulde 10 immer derselbe, auch bei einer Schleif- oder Läppbearbeitung der Schneidplattenoberseite.

Zur Befestigung der Schneidplatte 2 auf dem Trägerwerkzeug 8 ist ein Spannelement 1 auf dem Trägerwerkzeug 8 über eine Spannschraube 3 befestigt. Die Spannschraube 3 durchragt das Spannelement 1 und ist in eine Spannelementbohrung 5 auf dem Trägerwerkzeug 8 eingeschraubt.

Beim Eindrehen der Spannschraube 3 drückt die Spitze des Spannelement 1 auf die Schneidplatte 2. Bei Verwendung einer Schneidplatte 2 mit einer Spannmulde 9 ist an der zur Schneidplatte 2 gewandten Unterseite des Spannelements 1 ein als Nocken oder als Sichel ausgeformtes Eingreifelement 11 angeordnet. Dieses Eingreifelement 11 greift in die Spannmulde 9 ein und verankert diese dadurch auf dem Trägerwerkzeug 8. Das Eingreifelement kann über die Form als Nocken oder Sichel hinaus im Prinzip jede denkbare Gestalt haben, auch ein Spannelement 1 ohne Eingreifelement (also Glatt) ist möglich. Bei Verwendung eines Spannelements 1 ohne Eingreifelement ist aber kein Rückzug der Wendeschneidplatte gegeben.

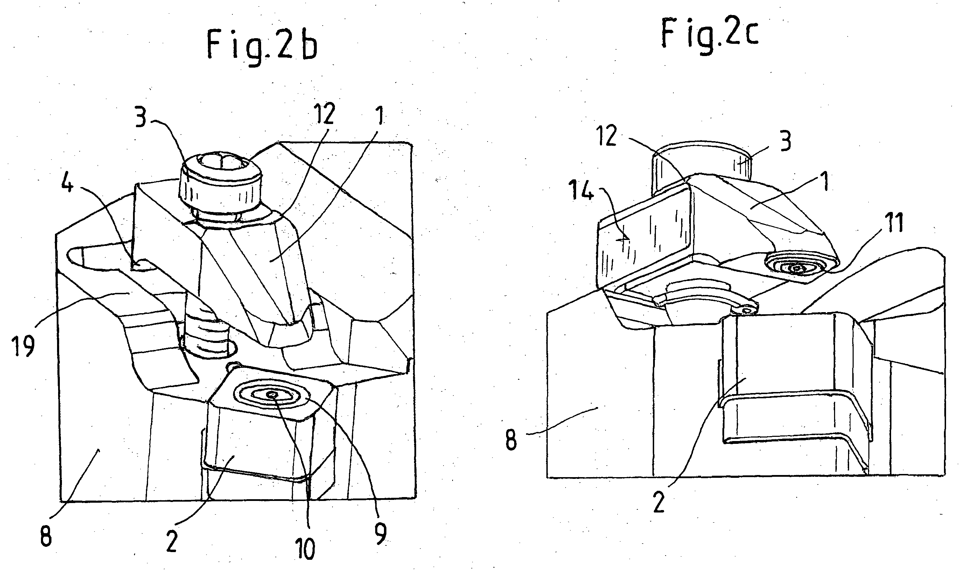

Erfindungsgemäß ist das Spannelement 1 (siehe die Figuren 2a, 2b, 2c) beidseitig auf dem Trägerwerkzeug 8 geführt. Zur Führung sind einerseits im Trägerwerkzeug 8 als Führung eine Nut 6 und andererseits am Spannelement 1 Führungsflächen 14 angeordnet, die eng toleriert sind und das Spannelement flächig bis zum Konturübergang 12 führen. In Figur 2a ist die Führungslänge L und die Führungsbreite B und deren Bereich angegeben. [L] liegt bevorzugt zwischen 10 - 22 mm (abhängig von Baugröße) und [B] zwischen 10 - 20 mm (abhängig von Baugröße). Die Toleranz der Führungsbreite [B] auf dem Trägerwerkzeug 8 beträgt B ± 0,025 und die Toleranz der Breite des Spannelements B ± 0,05. Figur 2c zeigt besonders die Führungsfläche 14.

Die Führung erfolgt dadurch sehr nahe bis zur Spannelementspitze 13. Dadurch ist ein sicheres Eingreifen der Spannelementkontur bzw. des Eingreifelements 11 in die erste Spannmulde 9 der Schneidplatte 2 gewährleistet. Die Lage des Spannelementes 1 ist somit auch unabhängig von der Werkzeuglage im Raum (Maschine) immer dieselbe (kein Verdrehen), womit ein Wechsel der Schneidplatte z. B. auch Überkopf (bezogen auf das Werkzeug) problemlos durchführbar ist.

Durch die eng tolerierte Führung wird auch bei schweren Bearbeitungen und evtl. kurzfristig auftretenden Überlastungen das Spannelements 1 seine Lage beibehalten. Im Falle eines "crashs" kann damit u. U. größerer Schaden vom Werkzeug und Werkstück abgewendet werden.

Figur 3 veranschaulicht, dass eine Positionierung in axialer Zugrichtung des Spannelementes 1 vom Zentrum des Spannelementkopfes zum Zentrum der Schneidplatte (WSP) aufgrund der Abmaße über die Bohrung im Spannelement und der Spannelementschraube automatisch gegeben ist. Dies wird dadurch erreicht, dass am hinteren Ende des Spannelements 1, von der Schneidplatte 2 aus gesehen, eine Rückzugsschräge 4 angeordnet ist und sich auf dem Spannelement 1 eine an die Rückzugsschräge 4 angepasste Abrutschschräge 15 befindet. Wird das Spannelement 1 mit der Spannschraube 3 befestigt, rutscht die Abrutschschräge 15 auf der Rückzugsschräge 4 ab, bis die zur Schneidplatte 2 gewandte Wandung der Spannelementbohrung 5 an der Spannschraube 3 anliegt. Dieses Anliegen der Wandung der Spannelementbohrung 5 an der Spannschraube 3 ist ein wichtiges Merkmal der Erfindung, da dadurch Δ2 gleich Null ist (siehe Figur 3) und der Abstand 16 von der Längsachse 17 der Spannschraube 3 zum Zentrum 18 der Schneidplatte 2 immer gleich groß ist. Das Eingreifelement 11 an der Unterseite des Spannelement 1 greift dadurch an genau definierter Stelle in die Spannmulde ein. Dies ist extrem wichtig, da sonst undefinierte Kräfte auf die Schneidplatte 2 einwirken. Die Winkel von Rückzugsschräge 4 und Abrutschschräge 15 liegen bevorzugt bei 20 Grad zur Horizontalen.

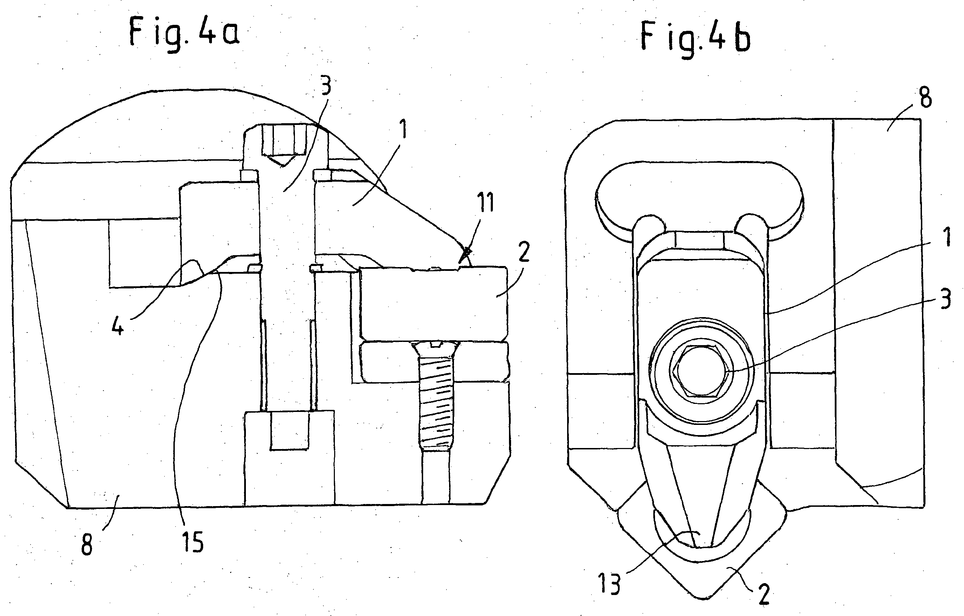

Die hohe Prozesssicherheit wird neben der seitlichen Führung hauptsächlich durch den Rückzug des Spannelementes mittels Rückzugsschräge 15, siehe Figur 3 oder Figur 4a), dem Formschluss zwischen Spannelementkontur bzw. Eingreifelement und Schneidplatte (WSP) sowie das Drücken des Eingreifelements 11 (Spannelementnase) vor der Mitte der Spannmulde 9 (*siehe z.B.* *Fig. 1a**)* erzielt. Durch diese Gegebenheiten wird die WSP verdrehsicher in den Plattensitz gezogen (Figur 4a). Mit "vor der Mitte der Spannmulde 9" ist gemeint, dass das Eingreifelement von der Schneidkante aus gesehen, vor der Mitte der Spannmulde 9 in diese formschlüssig eingreift und dadurch ein "Aufschnäbeln" der Schneidplatte ausgeschlossen ist.

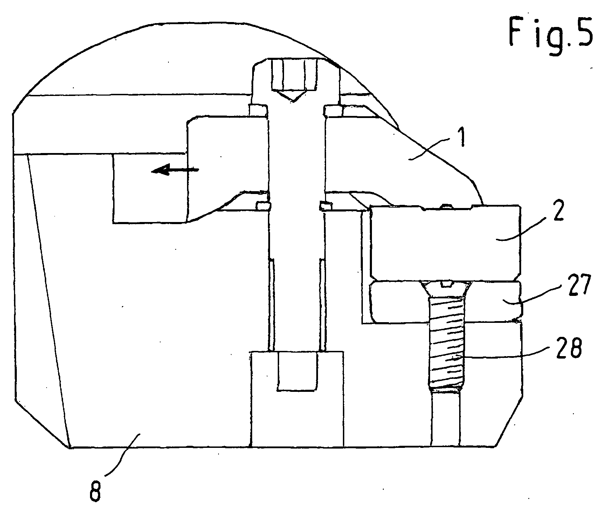

Figur 5 veranschaulicht, dass der Rückzug des Spannelementes 1 über das Auflaufen der Spannelementbohrung 5 *(**Fig.* 6) auf den Schraubenschaft begrenzt ist. Damit wird ein Herausgleiten des Spannelementes 1 aus der Schneidplattenmulde 9 verhindert und das ganze System Spannelement - Schraube - Werkzeug verspannt sich. Die Schneidplatte 2 sitzt auf einem Stützelement 27 (Stützplatte) auf und das Stützelement 27 ist mit einer Schraube 28 auf dem Trägerwerkzeug 8 verankert.

Elementar wichtig für ein prozesssicheres Spannen der Schneidplatte 2 ist das gewählte Längen- (Hebel-) verhältnis am Spannelement. Das erfindungsgemäße Werkzeugsystem ist mit einem Verhältnis von 1 : 1,7 ausgelegt (siehe Figur 6). Damit wird erreicht, dass 37% der eingeleiteten Schraubenkraft als Schließkraft auf die Schneidplatte wirken.

Das gewählte Achsabstandsmaß "X" (siehe Figur 6) ist das Resultat aus der Überlegung mit einer minimalen Anzahl an Spannelementgrößen (Variantenminimierung) alle die für das Werkzeugsystem relevanten und im Markt üblichen Schneidplattengeometrien und größen technisch einwandfrei im erfindungsgemäßen Werkzeugsystem zu spannen. Es sind 3 Spannelementgrößen mit 3 unterschiedlichen Achsabstandsmaßen (X=13,3 mm, X=16,15 mm und X= 21,5 mm) als vorteilhaft entwickelt worden. Diese decken alle WSP-Geometrien von Inkreis 9,52 mm bis 25,40 mm ab. Das Längen- (Hebel-) verhältnis ist bei allen 1 : 1,7.

Würde man die Väriantenminimierung nicht berücksichtigen, dann wäre ein Verhältnis kleiner 1,7 bis 1,0 technisch besser. Damit würde im Verhältnis 1 : 1 die Hälfte der eingeleiteten Schraubenkraft auf die Schneidplatte drücken. Der Bereich ab 1,7 bis 2,2 ist technisch möglich. Aber je größer das Verhältnis desto geringer ist die Kraft, die auf die Schneidplatte wirkt. Wenn beispielsweise die Spannschraube 3 mit einer Kraft F_{schraube} = 10.000 N das Spannelement 1 beaufschlagt, dann sollte sich die Kraft erfindungsgemäß bevorzugt zu F_{ASchraube} = 6.300 N auf die Schräge 15 und zu F_{WSPSSchraube} = 3.700 N auf die Schneidplatte 2 aufteilen, da 6.300 N = 3.700 N * 1,7.

Wenn der Abstand F_{ASchraube} zu F_{Schraube} 1 ist, dann beträgt erfindungsgemäß der Abstand F_{Schraube} zu F_{WSPSSchraube} bevorzugt 1,7. Dies zeigt Figur 6.

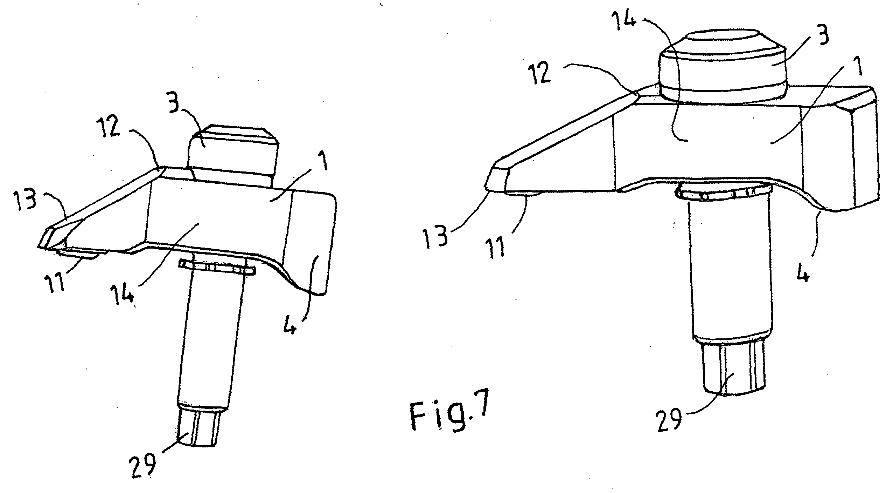

Bevorzugt ist auch der Bereich 1: 1,6 bis 1 : 1,8.
Die Spannschraube 3 ist am Schraubenende (siehe Figur 7) mit einem Außensechskant 29 ausgebildet um beim Schneidplattenwechsel ein Lösen der Spannschraube 3 von unten zu ermöglichen. Dies ist notwendig, wenn das Werkzeug z.B. über Kopf in der Maschine steht. Für M6 wurde eine Schlüsselweite von SW 4 errechnet. Möglich wäre bei M6 auch eine SW4,5. Für M8 wurde eine SW 5,5 gewählt. Möglich wäre bei M8 der Bereich SW5 bis SW6. Die Spannelementbohrung 5 durchragt das Trägerwerkzeug 8, so dass das Schraubenende der Spannschraube 3 erreichbar ist.

Nachfolgend die Werkstoffe und Werkzeugaufnahmen:
- Das Trägerwerkzeug 8 besteht bevorzugt aus den Werkstoffen Vergütungsstahl oder Warmarbeitsstahl
- Das Spannelement 1 besteht bevorzugt aus den Werkstoffen:
   - Stahl 500 - 750 HV
   - Hartmetall 850 - 1250 HV
   - Keramik 1250 - 1650 HV
- Das Spannelement ist konstruktiv auch als Verbundwerkstoff ausführbar in den Varianten:
   - Trägerwerkzeug aus Stahl und Abdeckung aus Hartmetall
   - Grundträger aus Stahl und Abdeckung aus Keramik
- Es sind alle gängigen Werkzeugaufnahme-Systeme wie CMS, HSK, KM, FTC, VDI, SK xxx möglich.
- Das erfindungsgemäße Werkzeugsystem ist auch für alle gängigen Werkzeugtypen anwendbar wie Schaftwerkzeuge, Bohrstangen, Kurzklemmhalter.

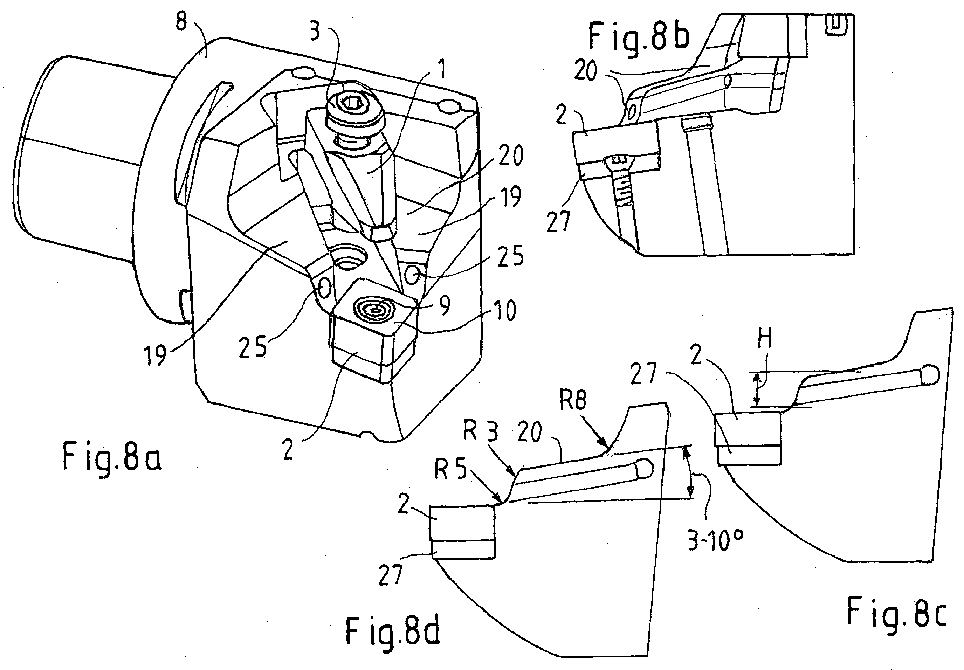

In einer vorteilhaften Ausführungsform der Erfindung ist im Trägerwerkzeug 8 eine Kühlmediumzuführung integriert. Die Kühlmediumzuführung ist in den Figuren 8a bis 8d gezeigt. Die Kühlmediumzuführung ist in den beiden seitlichen Spannelementführungen 19 integriert (Figur 8a und 8b). Das Kühlmedium wird dadurch sehr nahe zielgerichtet an den Schneidprozess herangebracht. Das Abgleiten der Späne wird mittels einer Rampe 20 mit Übergangsradien ermöglicht. Der Rampenwinkel a der Rampe 20 (Figur 8d) zu der Schneidplattenoberseite liegt zwischen 3 und 10 Grad. Ein Verhaken von (Fließ-) Spänen, wie dies früher häufig an Kühfmittelrohren zu sehen war, ist damit ausgeschlossen. Die Höhe H der Rampe 20 liegt bevorzugt zwischen 4 und 8 mm (Figur 8c).

Die Größe der Austrittsöffnung und Bohrung für das Kühlmedium geht je nach Werkzeugröße von 2 bis 10 mm. An der Austrittsöffnung ist ein Gewinde für eine mögliche Verschlussschraube angeordnet.

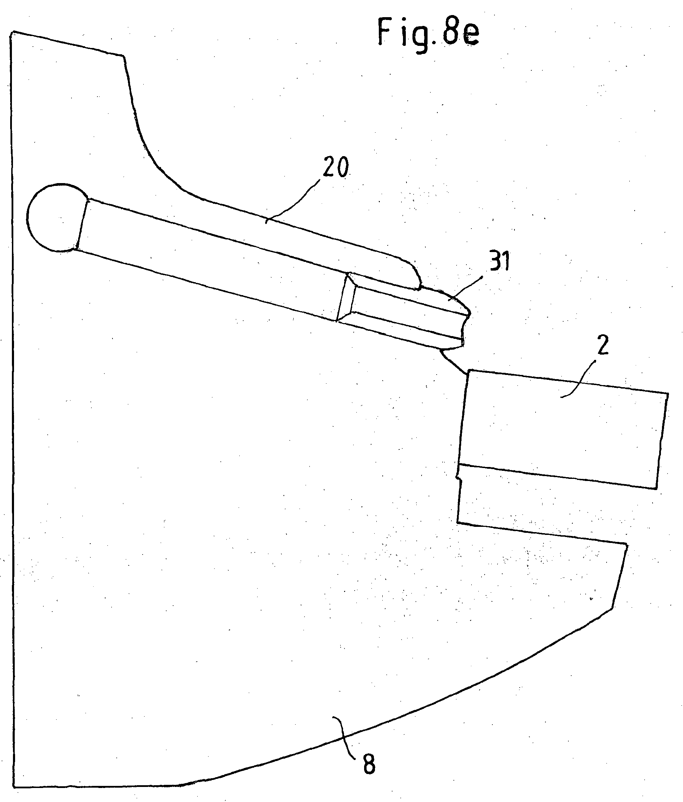

Es besteht allerdings auch die Möglichkeit, an der Austrittsöffnung eine Düse 31 (siehe Figur 8e) mit kegelförmiger Spitze und einer zentrischen Bohrung einzudrehen. Der Bohrungsdurchmesser variiert je nach Baugröße des Werkzeugs von Ø 1 mm - 6 mm. Die Düsen werden eingesetzt, wenn der Kühlmediumdruck < 20 bar ist und die "originale" Kühlmediumbohrung zum Verschmutzen (Verstopfen) neigt. Auch eine Erhöhung der Austrittsgeschwindigkeit des Kühlmediums wird hierduch erreicht, sofern das Kühlmediumvolumen am Bearbeitungsprozess ausreicht.

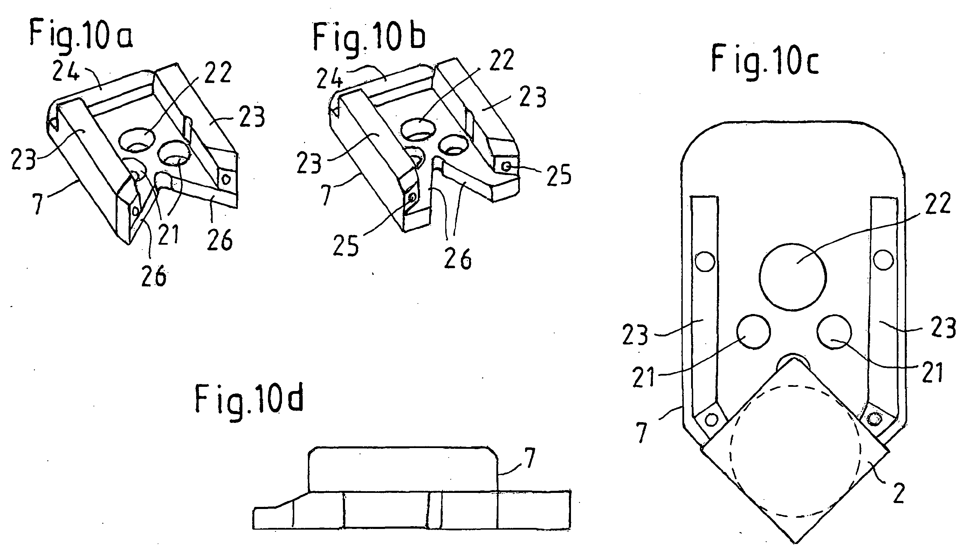

Das erfindungsgemäße Werkzeugsystem ist sowohl als Monoblockwerkzeug als auch als Werkzeug mit Adapter vorgesehen. Figur 9a zeigt das Werkzeugsystem als Monoblockwerkzeug und Figur 9b als Werkzeug mit Adapter. Das Monoblockwerkzeug gemäß Figur 9a ist mit dem Werkzeugsystem gemäß Figur 1 a identisch. Nachfolgend wird das Werkzeugsystem gemäß Figur 9b anhand von Figur 10a bis 10d näher erläutert.

Der Adapter 7 (siehe die Figuren 10a bis 10d) integriert alle Funktionen zum prozesssicheren Spannen der Schneidplatte 2 in sich. Der Adapter 7 wird am Trägerwerkzeug 8 mit Schrauben befestigt und weist daher zwei Schraubenbohrungen 21 auf. Außerdem verfügt er über eine Bohrung 22 für die Spannschraube 3. Damit das Spannelement 1 geführt ist, weist der Adapter 7 seitliche Adapterführungen 23, eine Adapter-Rückzugsschräge 24 und ggf. eine Kühlmediumzufuhr ähnlich dem Monoblockwerkzeug auf. Die Austrittsöffnung 25 und Bohrung der Kühlmediumzufuhr beträgt je nach Adaptergröße von 2 mm bis 5 mm. Die Kühlmediumzufuhr erfolgt durch die Adapterführungen 23. Die Adapter-Rückzugsschräge 24 ist am hinteren Ende des Adapters angeordnet. Die Höhe des Adapters beträgt 10 mm und die Höhe der Adapterführungen 23 beträgt 6 mm. Die Maße einer bevorzugten Ausführungsform sind den Figuren 10c und 10d zu entnehmen. An der zur Schneidplatte gewandten Seite des Adapters 7 sind je nach der Form der Schneidplatten Plattensitzwände 26 angeordnet, an denen die Schneidplatten anliegen, wie dies Figur 10c zeigt.

Die seitlichen Führungen und die Rückzugsschräge (20 Grad) sind bewusst am Adapter integriert (und nicht am Werkzeug) damit die Flucht/Axialität/Parallelität von Spannelement und Schneidplattenmitte exakt übereinstimmen. Der Adapter wird aus Warmarbeitsstahl gefertigt.

## Patentansprüche

1. Spanabhebendes Werkzeugsystem mit einem Trägerwerkzeug (8), einer Schneidplatte (2) mit einer Spannmulde (9) und einem Spannelement (1) mit zugehöriger Spannschraube (3), wobei an der zur Schneidplatte (2) gewandten Unterseite des Spannelements (1) ein Eingreifelement (11) angeordnet ist, das im eingebauten Zustand mit der Spannmulde (9) in spannender Berührung steht und die Schneidplatte (2) dadurch verankert und das Spannelement (1) über eine Schräge so geführt ist, dass beim Anziehen der Spannschraube (3) das Spannelement (1) in Spannrichtung gezogen wird, **dadurch gekennzeichnet**,
d. dass das Spannelement (1) in einer Nut (6) mit parallelen Spannelementführungen (19) angeordnet ist, in der das Spannelement (1) in Spannrichtung verschiebbar geführt ist, wobei das Spannelement (1) zwei parallele Führungsflächen (14) aufweist, die an den Spannelementführungen (19) flächig anliegenden, so dass das Spannelement (1) beidseitig in der Nut (6) geführt ist,
e. dass im Spannelement (1) eine Spannelementbohrung (5) für die Spannschraube (3) angeordnet ist und im eingespannten Zustand der Schneidplatte (2) die zur Schneidplatte (2) gewandte Wandung der Spannelementbohrung (5) an der Spannschraube (3) anliegt und
f. dass das Eingreifelement (11), von der Schneidkante der Schneidplatte (2) aus gesehen, vorder Mitte der Spannmulde (9) in diese formschlüssig eingreift.

2. Werkzeugsystem nach Anspruch 1, **dadurch gekennzeichnet, dass** das Werkzeugsystem als Monoblockwerkzeug ausgebildet ist, wobei die Schneidplatte (2) in einer Ausnehmung des Trägerwerkzeugs (8) angeordnet ist, das Spannelement (1) über die Spannschraube (3) auf dem Trägerwerkzeug (8) befestigt ist, die Schräge auf dem Trägerwerkzeug (8) angeordnet ist und beim Anziehen der Spannschraube (3) das Spannelement (1) in Spannrichtung hin zum Trägerwerkzeug (8) gezogen wird.

3. Werkzeugsystem nach Anspruch 1, **dadurch gekennzeichnet, dass** das Werkzeugsystem mit Adapter (7) ausgebildet ist, wobei der Adapter (7) in einer Adapternut (32) auf dem Trägerwerkzeug (8) befestigt ist, im Adapter (7) die Nut (6) mit den parallelen Spannelementführungen (19) angeordnet ist, in der Nut (6) das Spannelement (1) beidseitig geführt ist und im Adapter (7) eine durchgehende Bohrung (22) für die Spannschraube (3) und durchgehende Bohrungen (21) zur Befestigung des Adapters (7) auf dem Trägerwerkzeug (8) angeordnet sind, die Schneidplatte (2) in einer an die Geometrie der Schneidplatte (2) angepasste Aufnahme im Adapter (7) anliegt und die Schräge am Adapter (7) und nicht am Trägerwerkzeug (8) angeordnet ist.

4. Werkzeugsystem nach einem der Ansprüche 1 bis 3, **dadurch gekennzeichnet, dass** die Toleranz der Führungsbreite (B) der Nut (6), d.h. die Toleranz des Abstands der Spannelementführungen (19) voneinander B ± 0,025 beträgt und die Toleranz der Breite des Spannelements (1), d.h. die Toleranz des Abstands der Führungsflächen (14) am Spannelement (1) voneinander B ± 0,05 beträgt.

5. Werkzeugsystem nach einem der Ansprüche 1 bis 4, **dadurch gekennzeichnet, dass** am hinteren Ende des Spannelements (1), von der Schneidplatte (2) aus gesehen, eine die Schräge bildende Rückzugsschräge (4) angeordnet ist und sich beim Monoblockwerkzeug auf dem Trägerwerkzeug (8) eine an die Rückzugsschräge (4) angepasste Abrutschschräge (15) befindet und sich beim Werkzeugsystem mit Adapter (7) eine Rückzugsschräge (24) am hinteren Ende des Adapters (7) befindet und der Winkel der Rückzugsschrägen (24) und der Abrutschschrägen (15) zur Horizontalen bevorzugt zwischen 15 bis 25 Grad, besonders bevorzugt bei 20 Grad liegt.

6. Werkzeugsystem nach einem der Ansprüche 1 bis 5, **dadurch gekennzeichnet, dass** sich die Spannkraft F_{Schraube} der Spannschraube (3) auf das Spannelement (1) auf die Schrägen F_{ASchraube} und auf die Schneidplatte (2) F_{WSPSchraube} aufteilt, wobei F_{Schraube} = F_{ASchraube} + F_{WSPSchraube} und
F_{ASchraube} = FwSPSchraube * X
wobei X zwischen 1,6 und 1,8 bevorzugt bei 1,7 liegt.

7. Werkzeugsystem nach einem der Ansprüche 1 bis 6, **dadurch gekennzeichnet, dass** die Spannschraube (3) am Schraubenende mit einem Außensechskant (29) ausgebildet ist.

8. Werkzeugsystem nach einem der Ansprüche 1 bis 7, **dadurch gekennzeichnet, dass** in den Spannelementführungen (19) der Nut (6) eine Kühlmediumzuführung integriert ist.

9. Werkzeugsystem nach Anspruch 8, **dadurch gekennzeichnet, dass** die Spannelementführungen (19) als zur Schneidplatte (2) hin abfallende Rampen (20) ausgebildet sind und über zwei Übergangsradien R3, R5 bis zur Schneidplattenoberseite führen und die Austrittsöffnung (25) der Kühlmediumzuführung zwischen den Radien R3 und R5 angeordnet ist.

10. Werkzeugsystem nach Anspruch 9, **dadurch gekennzeichnet, dass** der Rampenwinkel α der Rampe (20) zu der Schneidplattenoberseite zwischen 3 und 10 Grad beträgt.

11. Werkzeugsystem nach Anspruch 9 oder 10, **dadurch gekennzeichnet, dass** an der Austrittsöffnung (25) ein Gewinde für eine Verschlussschraube oder eine Düse angeordnet ist.

12. Verwendung eines Werkzeugsystems nach einem der Ansprüche 1 bis 11 für die Dreh-Schruppbearbeitung mit Schnittdaten von bis zu vc = 3.000 m/min, ap bis 10 mm (abhängig von Plattengröße und Schneidplattengeometrie und dem zu bearbeitenden Werkstoff) und einem Vorschub f bis 1,0 mm.

## Claims

1. A machining tool system having a carrier tool (8), a cutting plate (2) with a clamping trough (9) and a clamping element (1) with an associated clamping screw (3), wherein arranged on the underside of the clamping element (1) facing the cutting plate (2) there is an engagement element (11) which in the installed state is in clamping contact with the clamping trough (9) and thereby anchors the cutting plate (2), and the clamping element (1) is guided by way of a chamfer in such a way that when the clamping screw (3) is tightened the clamping element (1) is drawn in the clamping direction, **characterised in that**
d. the clamping element (1) is arranged in a groove (6) with parallel clamping-element guides (19), in which the clamping element (1) is guided in a displaceable manner in the clamping direction, wherein the clamping element (1) has two parallel guide surfaces (14) which rest against the clamping-element guides (19) over an area in such a way that the clamping element (1) is guided on both sides in the groove (6),
e. arranged in the clamping element (1) there is a clamping-element bore (5) for the clamping screw (3) and in the clamped state of the cutting plate (2) the wall of the clamping-element bore (5) facing the cutting plate (2) rests against the clamping screw (3), and
f. the engagement element (11), viewed from the cutting edge of the cutting plate (2), engages before the centre of the clamping trough (9) into the latter in a form-locking manner.

2. A tool system according to claim 1, **characterised in that** the tool system is formed as a monoblock tool, wherein the cutting plate (2) is arranged in a recess of the carrier tool (8), the clamping element (1) is secured on the carrier tool (8) by way of the clamping screw (3), the chamfer is arranged on the carrier tool (8), and when the clamping screw (3) is tightened the clamping element (1) is drawn in the clamping direction towards the carrier tool (8).

3. A tool system according to claim 1, **characterised in that** the tool system is formed with an adapter (7), wherein the adapter (7) is secured in an adapter groove (32) on the carrier tool (8), the groove (6) with the parallel clamping-element guides (19) is arranged in the adapter (7), the clamping element (1) is guided in the groove (6) on both sides, and a continuous bore (22) for the clamping screw (3) and continuous bores (21) for the securement of the adapter (7) on the carrier tool (8) are arranged in the adapter (7), the cutting plate (2) rests in a receiver, adapted to the geometry of the cutting plate (2), in the adapter (7), and the chamfer is arranged on the adapter (7) and not on the carrier tool (8).

4. A tool system according to one of claims 1 to 3, **characterised in that** the tolerance of the guide width (B) of the groove (6), that is, the tolerance of the distance of the clamping-element guides (19) from each other, amounts to B + 0.025, and the tolerance of the width of the clamping element (1), that is, the tolerance of the distance of the guide surfaces (14) on the clamping element (1) from each other, amounts to B ± 0.05.

5. A tool system according to one of claims 1 to 4, **characterised in that** arranged at the rear end of the clamping element (1), viewed from the cutting plate (2), there is a retraction chamfer (4) that constitutes the chamfer, and in the case of the monoblock tool there is located on the carrier tool (8) a sliding chamfer (15) that is adapted to the retraction chamfer (4), and in the case of the tool system with an adapter (7) there is located at the rear end of the adapter (7) a retraction chamfer (24), and the angle of the retraction chamfers (24) and of the sliding chamfers (15) with respect to the horizontal preferably lies between 15 to 25 degrees, particularly preferably at 20 degrees.

6. A tool system according to one of claims 1 to 5, **characterised in that** the clamping force F_{Schraube} of the clamping screw (3) on the clamping element (1) is distributed between the chamfers F_{ASchraube} and the cutting plate (2) F_{WSPSchraube}, where F_{Schraube} = F_{ASchraube} + F_{WSPSchraube} and F_{ASchraube} = F_{WSPSchraube}*X, where X lies between 1.6 and 1.8, preferably at 1.7.

7. A tool system according to one of claims 1 to 6, **characterised in that** the clamping screw (3) at the screw end is formed with an external hexagon (29).

8. A tool system according to one of claims 1 to 7, **characterised in that** a coolant-supply is integrated in the clamping-element guides (19) of the groove (6).

9. A tool system according to claim 8, **characterised in that** the clamping-element guides (19) are formed as ramps (20) sloping towards the cutting plate (2) and lead by way of two transition radii R3, R5 as far as the cutting-plate upper side, and the outlet opening (25) of the coolant supply is arranged between the radii R3 and R5.

10. A tool system according to claim 9, **characterised in that** the ramp angle α of the ramp (20) with respect to the cutting-plate upper side amounts to between 3 and 10 degrees.

11. A tool system according to claim 9 or 10, **characterised in that** arranged at the outlet opening (25) there is a thread for a screw plug or a nozzle.

12. Use of a tool system according to one of claims 1 to 11 for rough turning with cutting data of up to vc= 3,000 m/min, ap up to 10 mm (dependent on plate size and cutting-plate geometry and the material to be machined) and a feed f up to 1.0 mm.

## Revendications

1. Système d'outil à enlèvement de copeaux, comprenant un outil-support (8), une plaquette de coupe (2), dotée d'un creux de serrage (9), et un élément de serrage (1) avec vis de serrage (3) associée, dans lequel il est prévu, sur la face inférieure de l'élément de serrage (1) tournée vers la plaquette de coupe (2), un élément d'engagement (11) qui, à l'état monté, est en contact de serrage avec le creux de serrage (9) et fixe ainsi la plaquette de coupe (2), et l'élément de serrage (1) est guidé sur un plan oblique de manière à ce que, lors du serrage de la vis de serrage (3), l'élément de serrage (1) soit tiré dans le sens du serrage, **caractérisé en ce que**
d. l'élément de serrage (1) est disposé dans une rainure (6) dotée de guides d'élément de serrage (19) parallèles, dans laquelle l'élément de serrage (1) est guidé avec possibilité de déplacement dans le sens de serrage, sachant que l'élément de serrage (1) présente deux surfaces de guidage (14) parallèles qui sont appliquées à plat contre les guides d'élément de serrage (19), de sorte que l'élément de serrage (1) est guidé de part et d'autre dans la rainure (6),
e. dans l'élément de serrage (1), il est prévu un trou d'élément de serrage (5) destiné à la vis de serrage (3) et, à l'état serré de la plaquette de coupe (2), la paroi du trou d'élément de serrage (5) tournée vers la plaquette de coupe (2) est appliquée contre la vis de serrage (3), et
f. l'élément d'engagement (11), vu depuis l'arête de coupe de la plaquette de coupe (2), s'engage par complémentarité de formes dans le creux de serrage (9), avant le milieu de celui-ci.

2. Système d'outil selon la revendication 1, **caractérisé en ce que** le système d'outil est réalisé sous forme d'outil monobloc, où la plaquette de coupe (2) est disposée dans un évidement de l'outil-support (8), l'élément de serrage (1) est fixé sur l'outil-support (8) par l'intermédiaire de la vis de serrage (3), le plan oblique est disposé sur l'outil-support (8) et, lors du serrage de la vis de serrage (3), l'élément de serrage (1) est tiré dans le sens du serrage, en direction de l'outil-support (8).

3. Système d'outil selon la revendication 1, **caractérisé en ce que** le système d'outil est réalisé avec un adaptateur (7), où l'adaptateur (7) est fixé dans une rainure d'adaptateur (32) sur l'outil-support (8), la rainure (6), dotée des guides d'élément de serrage (19) parallèles, est disposée dans l'adaptateur (7), l'élément de serrage (1) est guidé de part et d'autre dans la rainure (6), et un trou (22) traversant, destiné à la vis de serrage (3), et des trous (21) traversants, destinés à la fixation de l'adaptateur (7) sur l'outil-support (8), sont disposés dans l'adaptateur (7), la plaquette de coupe (2) est appliquée dans un logement de l'adaptateur (7) qui est adapté à la géométrie de la plaquette de coupe (2), et le plan oblique est disposé sur l'adaptateur (7) et non pas sur l'outil-support (8).

4. Système d'outil selon l'une des revendications 1 à 3, **caractérisé en ce que** la tolérance de la largeur de guidage (B) de la rainure (6), c'est-à-dire la tolérance de la distance réciproque entre les guides d'élément de serrage (19), est B ± 0,025, et la tolérance de la largeur de l'élément de serrage (1), c'est-à-dire la tolérance de la distance réciproque entre les surfaces de guidage (14) sur l'élément de serrage (1), est B ± 0,05.

5. Système d'outil selon l'une des revendications 1 à 4, **caractérisé en ce que**, à l'extrémité arrière de l'élément de serrage (1), vu depuis la plaquette de coupe (2), il est prévu un plan oblique de retrait (4) formant le plan oblique, et avec l'outil monobloc, il est prévu sur l'outil-support (8) un plan oblique de glissement (15) adapté au plan oblique de retrait (4), et avec le système d'outil à adaptateur (7), il est prévu un plan oblique de retrait (24) à l'extrémité arrière de l'adaptateur (7), et l'angle formé par les plans obliques de retrait (24) et les plans obliques de glissement (15) avec l'horizontale est de préférence compris entre 15 et 25 degrés, et est de façon particulièrement avantageuse de 20 degrés.

6. Système d'outil selon l'une des revendications 1 à 5, **caractérisé en ce que** la force de serrage F_{Schraube} de la vis de serrage (3) se répartit sur l'élément de serrage (1), sur les plans obliques F_{Aschraube} et sur la plaquette de coupe (2) F_{WSPSchraube}, avec
F_{Schraube} = F_{ASchraube} + F_{WSPSchraube} et
F_{ASchraube} = F_{WSPSchraube} *X,
où X est compris entre 1,6 et 1,8 et est de préférence égal à 1,7.

7. Système d'outil selon l'une des revendications 1 à 6, **caractérisé en ce que** la vis de serrage (3) est réalisée à l'extrémité de vis avec une partie à six pans (29).

8. Système d'outil selon l'une des revendications 1 à 7, **caractérisé en ce qu'**une amenée de fluide de refroidissement est intégrée dans les guides d'élément de serrage (19) de la rainure (6).

9. Système d'outil selon la revendication 8, **caractérisé en ce que** les guides d'élément de serrage (19) sont réalisés sous forme de rampes (20) descendant vers la plaquette de coupe (2) et mènent à la face supérieure de plaquette de coupe, par l'intermédiaire de deux rayons de transition R3, R5, et l'orifice de sortie (25) de l'amenée de fluide de refroidissement est disposé entre les rayons R3 et R5.

10. Système d'outil selon la revendication 9, **caractérisé en ce que** l'angle de rampe α de la rampe (20) avec la face supérieure de plaquette de coupe est compris entre 3 et 10 degrés.

11. Système d'outil selon la revendication 9 ou 10, **caractérisé en ce qu'**à l'orifice de sortie (25), il est prévu un filetage pour une vis d'obturation ou une buse.

12. Utilisation d'un système d'outil selon l'une des revendications 1 à 11, pour l'usinage au tour et le dégrossissage avec des caractéristiques de coupe allant jusqu'à vc = 3 000 m/min, ap jusqu'à 10 mm (en fonction des dimensions de plaque et de la géométrie de la plaquette de coupe, et du matériau à usiner) et une avance f allant jusqu'à 1,0mm.
